# EUROPÄISCHE PATENTSCHRIFT

(11) **EP 4 191 209 B1**
(45) Veröffentlichungstag und Bekanntmachung des Hinweises auf die Patenterteilung: **25.02.2026**
(21) Anmeldenummer: 21212204.8
(22) Anmeldetag: 03.12.2021
(51) Int. Cl.: G01F 15/063, G01K 17/06, G01F 25/10, G01K 19/00, G01F 15/00

(54) **VERFAHREN ZUM ANZEIGEN VON INFORMATIONEN**
METHOD FOR DISPLAYING INFORMATION
PROCÉDÉ D'AFFICHAGE DES INFORMATIONS

(43) Veröffentlichungstag der Anmeldung: 07.06.2023
(73) Patentinhaber: Landis+Gyr GmbH, 90459 Nürnberg (DE)
(72) Erfinder: Feld, Sven, 90556 Cadolzburg (DE)
(74) Vertreter: Marks & Clerk LLP

(56) Entgegenhaltungen:
- DE-A1- 102014 006 457
- DE-A1- 102015 103 484
- US-A- 3 550 426
- US-A1- 2005 223 815
- US-A1- 2015 241 259

## Beschreibung

Die Erfindung betrifft ein Verfahren zum Anzeigen von Informationen auf einer Anzeigeeinrichtung eines Messgerätes, wobei das Messgerät ein Flüssigkeitszähler, insbesondere ein Wasserzähler, oder ein thermischen Energiezähler, insbesondere ein Wärmezähler, Kältezähler oder dergleichen, ist. Ferner richtet sich die Erfindung auf ein entsprechendes Messgerät, das ein entsprechender Flüssigkeitszähler oder thermischer Energiezähler ist.

Durch offenkundige Vorbenutzung sind thermische Energiezähler bekannt, die eine vergleichsweise komplexe Mensch-Maschinen-Schnittstelle haben und dem Benutzer/Bediener eine Bedienung des jeweiligen thermischen Energiezählers erlauben. Im Allgemeinen haben die bekannten thermischen Energiezähler dafür mindestens eine Bedienungstaste.

Die US 2015 / 241 259 A1 beschreibt ein Fluiddurchflussmessgerät, dass einen Fluiddurchflussdetektor, einen Speicher, einen Mikrocontroller und einen Stromgenerator umfasst. Der Fluiddurchflussdetektor ist in einem Versorgungsrohr einer Flüssigkeitsströmungsquelle angeordnet. Wenn die Flüssigkeit im Versorgungsrohr fließt, erzeugt der Stromgenerator durch den Flüssigkeitsfluss eine Versorgungsleistung und versorgt den Flüssigkeitsdurchflussdetektor, den Speicher und den Mikrocontroller mit dieser Versorgungsleistung. Wenn der Fluiddurchflussdetektor den Flüssigkeitssfluss erfasst, erfasst der Fluiddurchflussdetektor den Flüssigkeitsfluss, der aus dem Versorgungsrohr ausgegeben wird, um einen Erkennungswert abzuleiten. Der Mikrocontroller empfängt den Erkennungswert und schreibt den Erkennungswert in den Speicher, oder der Mikrocontroller wandelt den Erkennungswert in einen Durchflusswert um und schreibt den Durchflusswert in den Speicher.

Die DE 10 2015 103 484 A1 beschreibt eine In-Line-Messeinrichtung zur Erfassung mindestens zweier Messgrößen eines durch ein Prozessbehältnis strömenden Messmediums, insbesondere einer Messflüssigkeit, umfassend einen in das Prozessbehältnis integrierten ersten Messaufnehmer, welcher dazu ausgestaltet ist, ein von einer Durchfluss-Messgröße, insbesondere einem Volumen- und/oder Massedurchfluss, des Messmediums abhängiges erstes Messsignal zu erzeugen, einen in das Prozessbehältnis integrierten zweiten Messaufnehmer, welcher dazu ausgestaltet ist, ein von einer, insbesondere von einer Konzentration mindestens eines Analyten in dem Messmedium abhängigen, Analyse-Messgröße abhängiges zweites Messsignal zu erzeugen, und eine mit dem ersten Messaufnehmer und dem zweiten Messaufnehmer verbundene Messelektronik, welche dazu ausgestaltet ist, das erste Messsignal und das zweite Messsignal zu empfangen und zu verarbeiten.

Der Erfindung liegt die Aufgabe zugrunde, ein Verfahren zum Anzeigen von Informationen auf einer Anzeigeeinrichtung eines Messgeräts, das ein Flüssigkeitszähler oder thermischer Energiezähler ist, zu liefern, das zum einen zu einem vergleichsweise einfach bedienbaren bzw. bedienerfreundlichen Messgerät und zum anderen zu einem kostengünstig herstellbaren Messgerät führt. Ein entsprechendes Messgerät, das ein entsprechender Flüssigkeitszähler oder thermischer Energiezähler ist, soll außerdem geschaffen werden. Das Messgerät soll ferner besonders funktionssicher sein.

Diese Aufgabe wird erfindungsgemäß durch die in den Hauptansprüchen 1 und 11 angegebenen Merkmale gelöst. Der Kern der Erfindung liegt darin, dass das Anzeigen auf der Anzeigeeinrichtung abhängig von mindesten einem aktuellen bzw. gerade gemessenen Messwert mindestens einer Messgröße ist. Das Anzeigen erfolgt somit bevorzugt situationsabhängig. Das Messgerät ist so tastenlos ausführbar.

Beispielsweise zeigt die Anzeigeeinrichtung einen aktuellen Messwert einer Messgröße an, der größer als ein entsprechender vorbestimmter, also insbesondere vorab festgelegter, Schwellenwert ist. Bevorzugt zeigt sie auch den aktuellen Messwert der Messgröße an, wenn der aktuelle Messwert dem entsprechenden vorbestimmten Schwellenwert entspricht.

Falls der aktuelle Messwert kleiner als der entsprechende vorbestimmte Schwellenwert ist, zeigt die Anzeigevorrichtung mindestens eine eichtechnische Information an. Zweck einer Eichung ist vor allem, Voraussetzungen für eine richtige Messung zu schaffen. Im Laufe der Zeit lässt die Genauigkeit der Messung aber zwangsläufig nach. Die Eichung erfolgt beispielsweise von staatlich anerkannten Prüfstellen. Sie muss in vorbestimmten Zeitintervallen durchgeführt werden.

Der vorbestimmte Schwellenwert liegt beispielsweise bei einem Mindestmesswert, wie Mindest(durch)fluss, des Messgerätes. Alternativ ist er zum Beispiel von diesem abhängig. Der vorbestimmte Schwellenwert bildet so bevorzugt eine Schaltschwelle bzw. Anlaufschwelle.

Die mindestens eine Messeinrichtung zum Messen der mindestens einen Messgröße ist beispielsweise als Flügelrad-, Ringkolben- oder Woltmann-Messeinrichtung ausgeführt. Alternativ oder zusätzlich umfasst diese mindestens ein, bevorzugt zwei, Temperaturmesselemente, wie Fühler oder Sensoren, und ein (Durch)Fluss-Messelement. Alternativ arbeitet die mindestens eine Messeinrichtung beispielsweise berührungslos, wie mit Ultraschall.

Der thermische Energiezähler ist beispielsweise ein Wärmezähler oder Kältezähler. Der Wasserzähler ist beispielsweise ein Kaltwasserzähler oder Warmwasserzähler.

Die Verarbeitungseinheit ist bevorzugt elektronischer Art. Sie ist beispielsweise als Mikrocontroller ausgeführt.

Die mindestens eine Anzeigeeinrichtung ist beispielsweise eine LCD-, LED-, OLED-Anzeigeeinrichtung oder als elektronisches Papier (E-Ink, E-Papier) ausgebildet.

Die mindestens eine Messeinrichtung und die Verarbeitungseinheit können direkt oder indirekt miteinander in Signalverbindung stehen. Die Verarbeitungseinheit und die mindestens eine Anzeigeeinrichtung können direkt oder indirekt miteinander in Signalverbindung stehen. Signale sind so entsprechend übertragbar.

Weitere vorteilhafte Ausgestaltungen der Erfindung sind in den Unteransprüchen angegeben.

Beispielsweise ist gemäß dem Unteranspruch 2 der entsprechende vorbestimmte Schwellenwert abhängig von dem entsprechenden Nennwert, wie Nenn(durch)fluss, bzw. Dauerwert (Dauer(durch)fluss), des Messgeräts.

Es ist zweckmäßig, wenn die Anzeigeeinrichtung gemäß dem Unteranspruch 3 eine (gewisse) Trägheit aufweist, um beispielsweise ein zuverlässiges und genaues Ablesen der mindestens einen eichtechnischen Information zu erlauben.

Zum Beispiel wird die DIN EN ISO 4064-2017 erfüllt und unterhalb von Q₁ (Mindestdurchfluss) wird kein (Durch)Fluss erkannt. Beispielsweise ist der entsprechende vorbestimmte Schwellenwert Q₁ bzw. von Q₁ abhängig, wie 0,5* Q₁. Er beginnt beispielsweise bei 0,05* Q₁ und ist beispielsweise in Schritten, wie 5 %-Schritten, parametrierbar.

Gemäß dem Unteranspruch 4 erfolgt ein Wechsel zwischen dem Anzeigen von mindestens einem aktuellen Messwert und der mindestens einen eichtechnischen Information automatisch bzw. selbstständig, das heißt insbesondere ohne Zutun bzw. Anwesenheit eines Bedieners bzw. Eichungsprüfers. Der automatische Wechsel erfolgt zum einen von dem Anzeigen mindestens eines aktuellen Messwerts auf das Anzeigen der mindestens einen eichtechnischen Information und auch bevorzugt umgekehrt von dem Anzeigen der mindestens einen eichtechnischen Information auf das Anzeigen mindestens eines aktuellen Messwerts. Es ist so verzichtbar, eine bestimmte Tastenkombinationen bzw. das Messgerät im Detail für das Auslösen der Anzeige der mindestens einen eichtechnischen Information zu kennen.

Gemäß dem Unteranspruch 5 ist das Anzeigen der mindestens einen eichtechnischen Information von außen unbeeinflussbar. Insbesondere ist dieses von einem Bediener nicht beendbar. Es ist günstigerweise auch von einem Bediener nicht in Gang setzbar.

Gemäß dem Unteranspruch 6 ist die mindestens eine eichtechnische Information beispielsweise eine Prüfsumme, insbesondere über den Code (checksum), wie CMAC oder Hash, die eine Überprüfung von Daten bzw. Werten hinsichtlich Integrität erlaubt. Sie ist zum Beispiel eine MAC (Message Authentication Code, Nachrichtenauthentifizierungscode)-Information, die erlaubt, Gewissheit über einen Ursprung von Daten bzw. Werten zu erhalten und deren Integrität zu prüfen. Beispielsweise ist die mindestens eine eichtechnische Information eine CMAC (Cipher-Based Message Authentication Code)-Information, die ebenfalls eine Nachrichtenauthentifizierungscode-Information ist. Die Firmware-Information betrifft insbesondere die Software des Messgeräts. Die Software gewährleistet die grundlegende Funktion/en des Messgeräts. Die Rekalibrierung ist für ein zuverlässiges Messen wichtig. Die Zeitstempel-Information gibt bevorzugt den Zeitpunkt der letzten Re-/Kalibrierung an. Bei der Blink-Anzeige blinkt bevorzugt zumindest ein Teil, bevorzugt zumindest ein Großteil, bevorzugt die Gesamtheit, der anzeigbaren Segmente bzw. Informationen der Anzeigeeinrichtung. Diese werden günstigerweise abwechselnd eingeschaltet und ausgeschaltet. Die Blink-Anzeige erlaubt einen Blinktest. Sie liefert beispielsweise eine Information, ob die Anzeigeeinrichtung im Stande ist, alle Werte und Informationen oder dergleichen richtig und vollständig anzuzeigen.

Es ist zweckmäßig, wenn gemäß dem Unteranspruch 7 unterschiedliche eichtechnische Informationen auf der Anzeigeeinrichtung angezeigt werden. Beispielsweise werden zwischen zwei und sieben unterschiedliche eichtechnische Informationen angezeigt. Diese können sich funktional bzw. inhaltlich voneinander unterscheiden.

Die Ausgestaltung gemäß dem Unteranspruch 8 erlaubt insbesondere eine vollständige Anzeige der anzeigbaren eichtechnischen Informationen. Ein Wechsel zwischen diesen eichtechnischen Informationen erfolgt bevorzugt automatisch bzw. selbständig. Es ist ein Vorteil, wenn jede eichtechnische Information für eine gewisse Zeitdauer, wie zwischen 0,5 und 6 Sekunden, bevorzugt zwischen 1 und 4 Sekunden, angezeigt wird.

Die Ausgestaltung gemäß dem Unteranspruch 9 ist besonders bedienerfreundlich. Eine ungewünschte Wiederholung eichtechnischer Informationen vor dem Anzeigen neuer eichtechnischer Informationen ist so vermeidbar.

Die Ausgestaltung gemäß dem Unteranspruch 10 ist wieder äußerst bedienerfreundlich. Sie erlaubt ein einfaches und sicheres Ablesen von mindestens einem aktuellen Messwert. Ein Wechsel in eine andere Anzeige unterbleibt, solange mindestens ein aktueller Messwert größer als der entsprechende vorbestimmte Schwellenwert ist.

Nachfolgend wird unter Bezugnahme auf die beigefügte Zeichnung beispielhaft eine bevorzugte Ausführungsform der Erfindung beschrieben. Dabei zeigen:
- Fig. 1: eine Blockschaltbild, das einen vereinfachten Aufbau eines erfindungsgemäßen Messgeräts veranschaulicht,
- Fig. 2: eine schematische Ansicht der Anzeigeeinrichtung des in Figur 1 dargestellten Messgeräts, das unter anderem einen aktuellen Messwert anzeigt, und
- Fig. 3: schematische Anzeigen der in Figur 1 dargestellten Anzeigeeinrichtung, die vor allem unterschiedliche eichtechnische Informationen zeigt

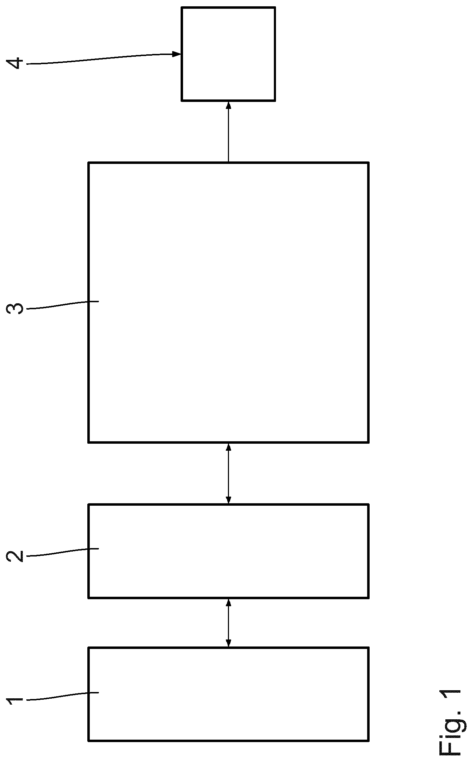

Zunächst Bezug nehmend auf Figur 1, umfasst ein Messgerät eine Durchfluss-Messeinrichtung 1, die gemäß dieser Ausführungsform ein Strömungsrohr und Ultraschallsensoren zum Messen eines Durchflusses eines Mediums, wie Wasser, aufweist. Die Durchfluss-Messeinrichtung 1 ist beispielsweise in eine entsprechende Leitung integriert. Es ist zweckmäßig, wenn die Messung in vorbestimmten Zeitabständen, wie sekündlich, wiederholt wird.

Die Durchfluss-Messeinrichtung 1 steht zumindest zeitweise mit einer elektronischen Schaltung 2 in Signalverbindung, die als integrierte, insbesondere anwendungsspezifisch integrierte, Schaltung ausgeführt ist. Es ist zweckmäßig, wenn die Funktion der Schaltung unveränderbar ist. Günstigerweise sind zwischen der Durchfluss-Messeinrichtung 1 und der elektronischen Schaltung 2 entsprechende Signale, Daten, Informationen oder gleichen bidirektional übertragbar.

Die elektronische Schaltung 2 wiederum steht mit einer Verarbeitungseinheit 3 zumindest zeitweise in Signalverbindung. Zwischen der elektronischen Schaltung 2 und der Verarbeitungseinheit 3 sind Signale, Daten, Informationen oder dergleichen bevorzugt bidirektional übertragbar.

Die Verarbeitungseinheit 3 wiederum steht zumindest zeitweise mit einer LCD-Anzeigeeinrichtung 4 in Signalverbindung. Insbesondere ist die LCD-Anzeigeeinrichtung 4 im Stande, von der Verarbeitungseinheit 3 empfangene bzw. von der Durchfluss-Messeinrichtung 1 gemessene Messwerte oder dergleichen anzuzeigen.

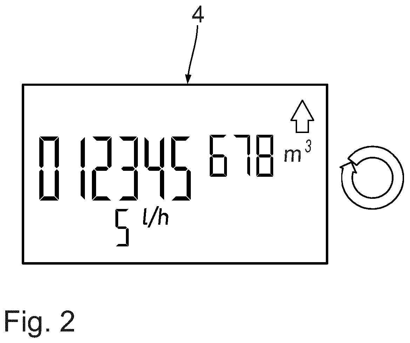

Wie aus Figur 2 hervorgeht, ist die LCD-Anzeigeeinrichtung 4 im Stande, einen aktuellen Durchflusswert bzw. Volumenstromwert, nämlich hier "5 l/h", anzuzeigen. Sie ist außerdem im Stande, ein Gesamtvolumen, nämlich hier "012345,678 m³", anzuzeigen. Nachdem hier der aktuelle Durchflusswert größer als ein vorbestimmter Durchflussschwellenwert ist, ist diese Anzeige auf der LCD-Anzeigeeinrichtung 4 statisch. Alternativ wird das Gesamtvolumen beispielsweise als Literanzahl angezeigt.

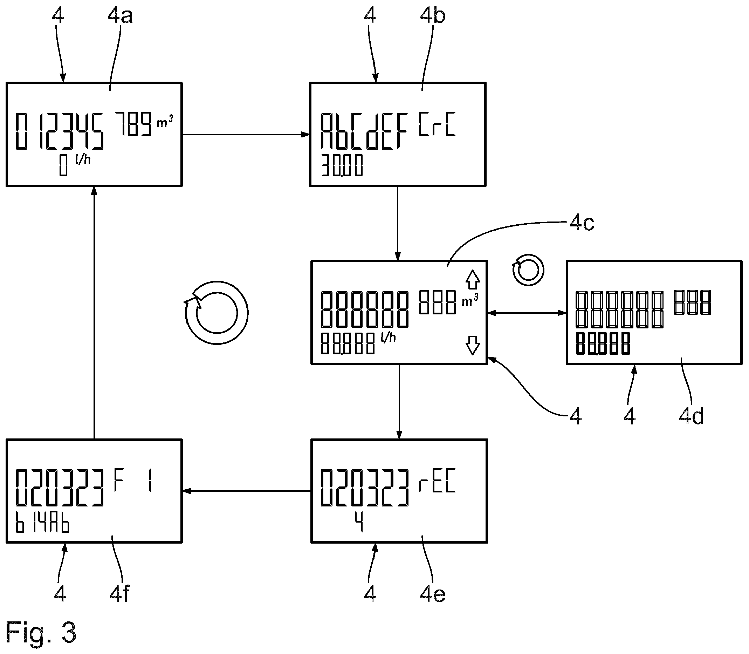

Wie Figur 3 veranschaulicht, zeigt die LCD-Anzeigeeinrichtung 4 als Anzeige 4a wieder das Gesamtvolumen und den aktuellen Durchflusswert an, der hier "0 l/h" (kein Durchfluss) beträgt. Nachdem dieser aktuelle Durchflusswert unter dem vorbestimmten Durchflussschwellenwert liegt, springt die LCD-Anzeigeeinrichtung 4 von der Anzeige 4a nach einer vorbestimmten Zeitdauer auf die Anzeige 4b, die oben eine CMAC- bzw. CRC-Information, nämlich "ABCdEF CrC", und unten eine Firmware-Information, nämlich "30.00", anzeigt.

Wenn der aktuelle Durchflusswert weiterhin unter dem Durchflussschwellenwert liegt, springt die LCD-Anzeigeeinrichtung 4 nach einer vorgeschriebenen Zeitdauer von der Anzeige 4b auf die Anzeige 4c bzw. 4d, die eine Blink-Anzeige ist. Mit einer Blinkfrequenz, beispielsweise von 0,5 Sekunden, blinken alle Segmente der LCD-Anzeigeeinrichtung 4 kurz auf.

Wenn der aktuelle Durchflusswert weiterhin unter dem Durchflussschwellenwert liegt, springt die LCD-Anzeigeeinrichtung 4 von der Anzeige 4c bzw. 4d nach einer vorbestimmten Zeitdauer auf die Anzeige 4e, die eine rechtlich relevante Logbuch-Rekalibrierung mit Zeitstempel und Anzahl der Kalibrierungen ("020323 rEC") darstellt. In diesem Falle wurden bereits vier Kalibrierungen (unten dargestellt) vorgenommen.

Wenn der aktuelle Durchflusswert weiterhin unter dem Durchflussschwellenwert liegt, springt die LCD-Anzeigeeinrichtung 4 nach einer vorbestimmten Zeitdauer von der Anzeige 4e auf die Anzeige 4f, die ein rechtlich relevantes Logbuch-Firmenware-Update mit Zeitstempel und (einem Teil der) CMAC (-Information) darstellt.

Wenn der aktuelle Durchflusswert weiterhin unter dem vorbestimmten Durchflussschwellenwert liegt, springt die LCD-Anzeigeeinrichtung 4 nach einer vorbestimmten Zeitdauer von der Anzeige 4f wieder zurück auf die Anzeige 4a und die geschilderten Anzeigen werden erneut angezeigt, bis der aktuelle Durchflusswert wieder dem vorbestimmten Durchflussschwellenwert entspricht oder größer als dieser ist.

Die LCD-Anzeigeeinrichtung 4 ist dynamisch. Ihre Anzeige ist situationsabhängig.

Es ist zweckmäßig, wenn das Messgerät Normen, Softwareleitfäden und PTB-Anforderungen, wie WELMEC-Guide 7.2 und PTB A-50.7, erfüllt.

Die Signalverbindungen können drahtlos oder drahtgebunden ausgeführt sein.

Die dargestellten bzw. erwähnten Werte, Informationen oder dergleichen sind nur beispielhaft und dienen nur der Erläuterung.

## Patentansprüche

1. Verfahren zum Anzeigen von Informationen auf einer Anzeigeeinrichtung (4) eines Flüssigkeitszählers oder thermischen Energiezählers, umfassend die Schritte
- Messen mindestens einer Messgröße, insbesondere eines Flusses,
- Anzeigen mindestens eines aktuellen Messwerts der mindestens einen Messgröße auf der Anzeigeeinrichtung (4), und
- Anzeigen mindestens einer eichtechnischen Information auf der Anzeigeeinrichtung (4), falls mindestens der aktuelle Messwert der mindestens einen Messgröße kleiner als ein entsprechender vorbestimmter Schwellenwert ist.

2. Verfahren nach Anspruch 1, wobei der entsprechende vorbestimmte Schwellenwert abhängig von einem entsprechenden Nennwert, wie Nenndurchfluss, des Flüssigkeitszählers oder thermischen Energiezählers ist.

3. Verfahren nach Anspruch 1 oder 2, wobei der entsprechende vorbestimmte Schwellenwert abhängig von einer Dynamik des Flüssigkeitszählers oder thermischen Energiezählers ist.

4. Verfahren nach einem der vorherigen Ansprüche, wobei ein Wechsel zwischen dem Anzeigen des mindestens einen aktuellen Messwerts und der mindestens einen eichtechnischen Information automatisch in Abhängigkeit mindestens eines aktuellen Messwerts erfolgt.

5. Verfahren nach einem der vorherigen Ansprüche, wobei das Anzeigen der mindestens einen eichtechnischen Information von außen unbeeinflussbar ist.

6. Verfahren nach einem der vorherigen Ansprüche, wobei die mindestens eine eichtechnische Information eine Prüfsummen-Information, insbesondere über den Code, wie CMAC-Information, MAC-Information, CRC-Information, Firmware-Information, Rekalibrierungs-Information, Kalibrierungs-Information, wie Anzahl der Re-/Kalibrierungen, Zeitstempel-Information und/oder Blink-Anzeige ist.

7. Verfahren nach einem der vorherigen Ansprüche, wobei unterschiedliche eichtechnische Informationen auf der Anzeigeeinrichtung (4) angezeigt werden.

8. Verfahren nach Anspruch 7, wobei die unterschiedlichen eichtechnischen Informationen abwechselnd, insbesondere rollierend, angezeigt werden.

9. Verfahren nach Anspruch 7 oder 8, wobei das Anzeigen der unterschiedlichen eichtechnischen Informationen nach einem Wechsel zu dem Anzeigen von mindestens einem aktuellen Messwert bei dem Anzeigen der zuletzt angezeigten eichtechnischen Information fortgesetzt wird.

10. Verfahren nach einem der vorherigen Ansprüche, wobei das Anzeigen von mindestens einem aktuellen Messwert statisch ist, solange dieser größer als der entsprechende vorbestimmte Schwellenwert ist.

11. Flüssigkeitszähler oder thermischer Energiezähler, umfassend
a) mindestens eine Messeinrichtung (1) zum Messen mindestens einer Messgröße, insbesondere eines Flusses,
b) eine mit der mindestens einen Messeinrichtung (1) zumindest zeitweise in Signalverbindung stehende Verarbeitungseinheit (3), und
c) mindestens eine mit der Verarbeitungseinheit (3) zumindest zeitweise in Signalverbindung stehende Anzeigeeinrichtung (4), die das Verfahren gemäß einen der vorherigen Ansprüche nutzt.

## Claims

1. Method for displaying information on a display device (4) of a fluid meter or thermal energy meter, comprising the steps of
- measuring at least one measurement variable, in particular a flow,
- displaying at least one current measurement value of the at least one measurement variable on the display device (4), and
- displaying at least one calibration-related piece of information on the display device (4) if at least the current measurement value of the at least one measurement variable is smaller than a corresponding predetermined threshold value.

2. Method according to claim 1, wherein the corresponding predetermined threshold value is dependent on a corresponding nominal value, such as the nominal flow, of the fluid meter or thermal energy meter.

3. Method according to claim 1 or 2, wherein the corresponding predetermined threshold value is dependent on a dynamic characteristic of the fluid meter or thermal energy meter.

4. Method according to any one of the preceding claims, wherein switching between displaying the at least one current measurement value and the at least one calibration-related piece of information takes place automatically depending on at least one current measurement value.

5. Method according to any one of the preceding claims, wherein the display of the at least one calibration-related piece of information cannot be influenced from the outside.

6. Method according to any one of the preceding claims, wherein the at least one calibration-related piece of information is checksum information, in particular relating to the code, such as CMAC information, MAC information, CRC information, firmware information, recalibration information, calibration information, such as the number of recalibrations/calibrations, timestamp information and/or flashing display.

7. Method according to any one of the preceding claims, wherein different calibration-related pieces of information are displayed on the display device (4).

8. Method according to claim 7, wherein the different calibration-related pieces of information are displayed alternately, in particular on a rolling basis.

9. Method according to claim 7 or 8, wherein the display of the different calibration-related pieces of information is continued after a change to the display of at least one current measurement value when displaying the last displayed calibration-related piece of information.

10. Method according to any one of the preceding claims, wherein the display of at least one current measurement value is static as long as it is greater than the corresponding predetermined threshold value.

11. Fluid meter or thermal energy meter, comprising
a) at least one measuring device (1) for measuring at least one measurement variable, in particular a flow,
b) a processing unit (3) connected at least temporarily to the at least one measuring device (1) for signal communication, and
c) at least one display device (4) connected at least temporarily to the processing unit (3) for signal communication, which uses the method according to any one of the preceding claims.

## Revendications

1. Procédé d'affichage d'informations sur un dispositif d'affichage (4) d'un compteur de fluide ou compteur d'énergie thermique, comprenant les étapes suivantes
- la mesure d'au moins une grandeur de mesure, en particulier d'un flux,
- l'affichage d'au moins une valeur de mesure actuelle de la au moins une grandeur de mesure sur le dispositif d'affichage (4) et
- l'affichage d'au moins une information d'étalonnage sur le dispositif d'affichage (4), au cas où au moins la valeur de mesure actuelle de la au moins une grandeur de mesure est inférieure à une valeur seuil prédéterminée correspondante.

2. Procédé selon la revendication 1, dans lequel la valeur seuil prédéterminée correspondante dépend d'une valeur nominale correspondante, comme le débit nominal, du compteur de fluide ou compteur d'énergie thermique.

3. Procédé selon la revendication 1 ou 2, dans lequel la valeur seuil prédéterminée correspondante dépend d'une dynamique du compteur de fluide ou compteur d'énergie thermique.

4. Procédé selon l'une quelconque des revendications précédentes, dans lequel un changement entre l'affichage de la au moins une valeur de mesure actuelle et la au moins une information d'étalonnage est automatiquement effectué en fonction d'au moins une valeur de mesure actuelle.

5. Procédé selon l'une quelconque des revendications précédentes, dans lequel l'affichage de la au moins une information d'étalonnage ne peut pas être influencé de l'extérieur.

6. Procédé selon l'une quelconque des revendications précédentes, dans lequel la au moins une information d'étalonnage est une information de sommes de contrôle, en particulier sur le code, comme une information CMAC, information MAC, information CRC, information sur le micrologiciel, information de recalibrage, information de calibrage comme le nombre de re-/calibrages, information d'horodateur et/ou affichage de clignotement.

7. Procédé selon l'une quelconque des revendications précédentes, dans lequel des informations d'étalonnage différentes sont affichées sur le dispositif d'affichage (4).

8. Procédé selon la revendication 7, dans lequel les informations d'étalonnage différentes sont affichées alternativement, en particulier par roulement.

9. Procédé selon la revendication 7 ou 8, dans lequel l'affichage des informations d'étalonnage différentes est poursuivi après un changement de l'affichage d'au moins une valeur de mesure actuelle lors de l'affichage de l'information d'étalonnage affichée en dernier lieu.

10. Procédé selon l'une quelconque des revendications précédentes, dans lequel l'affichage d'au moins une valeur de mesure actuelle est statique tant que celle-ci est supérieure à la valeur seuil prédéterminée correspondante.

11. Compteur de fluide ou compteur d'énergie thermique comprenant
a) au moins un dispositif de mesure (1) pour la mesure d'au moins une grandeur de mesure, en particulier d'un flux,
b) une unité de traitement (3) se trouvant en liaison de signal au moins temporairement avec le au moins un dispositif de mesure (1) et
c) au moins un dispositif d'affichage (4) se trouvant en liaison de signal au moins temporairement avec l'unité de traitement (3), qui utilise le procédé selon l'une quelconque des revendications précédentes.
